# DEMANDE DE BREVET EUROPEEN

(11) **EP 4 681 895 A1**
(43) Date de publication de la demande: **21.01.2026**
(21) Numéro de dépôt: 25190513.9
(22) Date de dépôt: 18.07.2025
(51) Int. Cl.: B25J 19/00, B25J 19/06, F16D 49/00

(54) **DISPOSITIF DE BLOCAGE AUTOMATIQUE D'UN BRAS DE ROBOT**

(30) Priorité: 19.07.2024 FR 2407978
(71) Demandeur: Staubli Faverges, 74210 Faverges-Seythenex (FR)
(72) Inventeur: BAY, Martin, 74370 FILLIÈRE (FR); DIAZ, Xavier, 74210 FAVERGES-SEYTHENEX (FR); MARTIN, Stéphane, 74410 ST JORIOZ (FR)
(74) Mandataire: Lavoix

(57) **Abrégé**

La présente invention concerne un dispositif de blocage (27) comprenant :
- une couronne (29) pourvue d'un alésage (43),
- un moyeu (31), mobile en rotation par rapport à la couronne,
- une platine (55), solidaire du moyeu (31),
- un basculeur (33), mobile en rotation entre une position de blocage et une position de libération,
- une rainure (35), débouchant sur l'alésage (43) et ménagée dans le basculeur ou la platine,
- une rampe de guidage (37), ménagée à une périphérie du basculeur ou de la platine,
- un pion (39), monté dans la rainure pour être bloqué entre l'alésage et la rampe de guidage lorsque le basculeur est en position de blocage, et
- un ressort de rappel (41), agissant entre la platine et le basculeur pour ramener le basculeur vers la position de libération.

## Description

La présente invention concerne un dispositif de blocage d'un bras de robot et un bras de robot comprenant un tel dispositif de blocage.

Les bras de robots industriels articulés sont soumis à la pesanteur et, suivant leur configuration, un arrêt soudain du courant d'alimentation des moteurs d'axe peut occasionner un mouvement incontrôlé du bras avant le serrage effectif du frein du moteur. Ce problème concerne particulièrement les bras de robot comportant un axe linéaire vertical, puisque la pesanteur s'applique quelle que soit la configuration.

KR20120107270A et KR 101 249 982 B1 décrivent un dispositif de blocage d'un axe vertical de bras de robot. Le déplacement vertical du bras est assuré à l'aide d'une vis mise en rotation par un moteur par l'intermédiaire d'une courroie. La vis est solidaire d'une roue dentée. Un levier articulé sur le bâti dispose d'un galet en appui sur la courroie par l'effet d'un ressort. En cas de rupture de la courroie, le ressort entraine la rotation du levier et une dent du levier vient bloquer la roue dentée.

Cette solution ne s'applique qu'à la rupture d'une courroie de transmission et est inefficace en cas de rupture soudaine de l'alimentation du moteur. Par ailleurs cette solution ne permet pas le blocage de la vis en limitant la rotation de la vis.

US 2021/156437 A1, US 2016/121492 A1, CN 110 454 527 A et CN 208 962 041 U divulguent des dispositifs de freinage ou de maintien en position.

Le but de l'invention est alors de proposer un dispositif de blocage limitant les déplacements dus au poids du bras de robot en cas de coupure de l'alimentation du moteur.

A cet effet, l'invention a pour objet un dispositif de blocage un dispositif de blocage automatique d'un premier membre et d'un deuxième membre d'un bras de robot, mobiles l'un par rapport à l'autre, le dispositif de blocage comprenant :
- une couronne, pourvue d'un alésage, centrée sur un axe moteur fixe par rapport à la couronne et configurée pour être solidaire du premier membre,
- un moyeu, configuré pour être mis en rotation autour de l'axe moteur par rapport à la couronne, à l'aide d'un moteur appartenant au bras de robot,
- une platine, solidaire en rotation du moyeu autour de l'axe moteur,
- un basculeur, porté par la platine et mobile en rotation par rapport à la platine autour d'un axe de basculeur parallèle à l'axe moteur et non-coaxial avec l'axe moteur, entre une position de blocage et une position de libération,
- une rainure, ménagée dans un premier élément parmi le basculeur et la platine, la rainure s'étendant radialement par rapport à l'axe moteur vers l'alésage suivant un axe de rainure ,
- une rampe de guidage, ménagée à une périphérie d'un deuxième élément parmi le basculeur et la platine, le deuxième élément étant distinct du premier élément,
- un pion, qui est cylindrique et qui s'étend selon un axe de pion, parallèle à l'axe moteur, le pion étant monté dans la rainure pour être mobile en translation selon l' axe de rainure par rapport au premier élément lorsque le basculeur est en position de libération, et pour être bloqué entre l'alésage et la rampe de guidage lorsque le basculeur est en position de blocage, et
un ressort de rappel, agissant entre la platine et le basculeur de sorte à appliquer une force de rappel ramenant le basculeur vers la position de libération.

En cas de coupure de l'alimentation du moteur, la rotation de la platine par rapport à la couronne est bloquée grâce au déplacement du pion et à son blocage entre l'alésage et la rampe de guidage. Cela a pour conséquence de bloquer le déplacement du deuxième membre par rapport au premier membre. Le ressort de rappel garantie un seuil de déclenchement du dispositif de blocage et assure un déblocage automatique de la rotation de la platine par rapport à la couronne lorsque l'alimentation du moteur est rétablie. De plus, le dispositif de blocage étant intégré au niveau du moyeu, il peut être mis en place quelle que soit la transmission mécanique choisie pour entraîner le deuxième membre par rapport au premier membre à l'aide du moteur.

Suivant d'autres aspects avantageux de l'invention, le dispositif de blocage comprend une ou plusieurs des caractéristiques suivantes, prises isolément ou suivant toutes les combinaisons techniquement possibles :
- lorsque le sens de rotation du moyeu est antihoraire, respectivement horaire, autour de l'axe moteur par rapport à la couronne, pour entrainer le deuxième membre à l'encontre de la pesanteur, la rampe de guidage est plane et le basculeur passe de la position de libération à la position de blocage en tournant par rapport à la platine dans le sens horaire, respectivement antihoraire, autour de l'axe de basculeur, par rapport à la platine,
- l'axe moteur est agencé entre l'axe de basculeur et la rainure,
- la rampe de guidage est coplanaire avec un plan de rampe, parallèle à l'axe moteur et incliné par rapport à un plan radial contenant l'axe moteur et l'axe de basculeur, d'un angle de 86 à 90 degrés, de préférence de 87 à 89 degrés et de préférence encore de 88 degrés,
- le pion est libre en rotation autour de l'axe de pion lorsque le basculeur est en position de libération, et la rotation du pion autour de l'axe de pion est bloquée lorsque le basculeur est en position de blocage, par l'interposition du pion entre l'alésage et la rampe de guidage,
- lorsque le basculeur est en position de libération, un centre d'inertie du basculeur est positionné dans un plan radial contenant l'axe de basculeur et l'axe moteur,
- lorsque le basculeur est en position de libération, un centre d'inertie d'un ensemble, formé par la platine, le basculeur, le ressort de rappel et le pion est positionné sur l'axe moteur,
- le premier élément est le basculeur et le deuxième élément est la platine,
- le premier élément est la platine et le deuxième élément est le basculeur,
- lorsque le basculeur est en position de libération, la force de rappel exercée par le ressort de rappel tend à amener le pion en butée contre une paroi de butée du deuxième élément,
- la rampe de guidage est une première rampe de guidage, une deuxième rampe de guidage, symétrique à la première rampe de guidage par rapport à un plan radial contenant l'axe de basculeur et l'axe moteur, est ménagée sur le deuxième élément et lorsque le basculeur est en position de libération, la force de rappel exercée par le ressort de rappel tend à amener le pion tel que l'axe de pion soit dans le plan radial,
- le dispositif de blocage comprend un basculeur additionnel, porté par la platine et mobile en rotation par rapport à la platine autour d'un axe de basculeur additionnel parallèle à l'axe moteur et non-coaxial avec l'axe moteur, entre une position de blocage et une position de libération, une rainure additionnelle, ménagée dans un troisième élément parmi le basculeur additionnel et la platine, la rainure additionnelle s'étendant radialement par rapport à l'axe moteur vers l'alésage suivant un axe de rainure additionnelle , une rampe de guidage additionnelle, ménagée à une périphérie d'un quatrième élément parmi le basculeur additionnel et la platine, le quatrième élément étant distinct du troisième élément, un pion additionnel cylindrique, qui s'étend selon un axe de pion additionnel, parallèle à l'axe moteur, le pion additionnel étant monté dans la rainure additionnelle pour être mobile en translation selon l'axe de rainure additionnelle par rapport au troisième élément lorsque le basculeur additionnel est en position de libération, et pour être bloqué entre l'alésage et la rampe de guidage additionnelle lorsque le basculeur additionnel est en position de blocage, et un ressort de rappel additionnel, agissant entre la platine et le basculeur additionnel de sorte à appliquer une force de rappel ramenant le basculeur additionnel vers la position de libération.

L'invention a également pour objet un bras de robot comprenant un premier membre, un deuxième membre, mobile par rapport au premier membre, et un dispositif de blocage tel que décrit ci-avant dans lequel le premier membre est entrainé par le moyeu et le second membre est solidaire de la couronne ou le premier membre est solidaire de la couronne et le second membre est entrainé par le moyeu.

Suivant d'autres aspects avantageux de l'invention, le bras de robot comprend les caractéristiques suivantes :
- le deuxième membre est mobile en translation par rapport au premier membre le long d'un axe vertical,
- le bras de robot comprend un pignon solidaire en rotation du moyeu autour de l'axe moteur et une crémaillère fixée au deuxième membre, la crémaillère étant en prise avec le pignon de sorte que la rotation du pignon autour de l'axe moteur entraine une translation de la crémaillère par rapport au pignon suivant l'axe vertical.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue de face d'un bras de robot sur lequel un dispositif de blocage selon un premier mode de réalisation de l'invention est intégré,
[Fig. 2] La figure 2 est une vue de détail de la figure 1 comportant une coupe locale suivant un plan vertical passant par un axe moteur,
[Fig. 3] La figure 3 est une vue de détail de la coupe locale de la figure 2,
[Fig. 4] La figure 4 est une vue de face du dispositif de blocage, un basculeur étant en position de libération,
[Fig. 5] La figure 5 est une vue similaire à la vue de la figure 4, le basculeur étant dans une position de blocage,
[Fig. 6] La figure 6 est une vue similaire à la vue de la figure 3, montrant un dispositif de blocage selon un deuxième mode de réalisation de l'invention,
[Fig. 7] La figure 7 est une vue similaire à la vue de la figure 4, montrant le dispositif de blocage de la figure 6 dans une position de libération,
[Fig. 8] La figure 8 est une vue similaire à la vue de la figure 5, montrant le dispositif de blocage de la figure 6 dans une position de blocage,
[Fig. 9] La figure 9 est une vue similaire à la vue de la figure 4, montrant un dispositif de blocage selon un troisième mode de réalisation de l'invention,
[Fig. 10] La figure 10 est une vue en coupe selon le plan X-X de la figure 9,
[Fig. 11] La figure 11 est une vue en coupe selon le plan XI-XI de la figure 9,
[Fig. 12] La figure 12 est une vue similaire à la vue de la figure 9, le basculeur étant en position de blocage et un basculeur additionnel étant en position de libération,
[Fig. 13] La figure 13 est une vue similaire à la vue de la figure 9, le basculeur étant en position de libération et le basculeur additionnel étant en position de blocage, et
[Fig. 14] La figure 14 est une vue similaire à la vue de la figure 5, montrant un dispositif de blocage selon un quatrième mode de réalisation de l'invention.

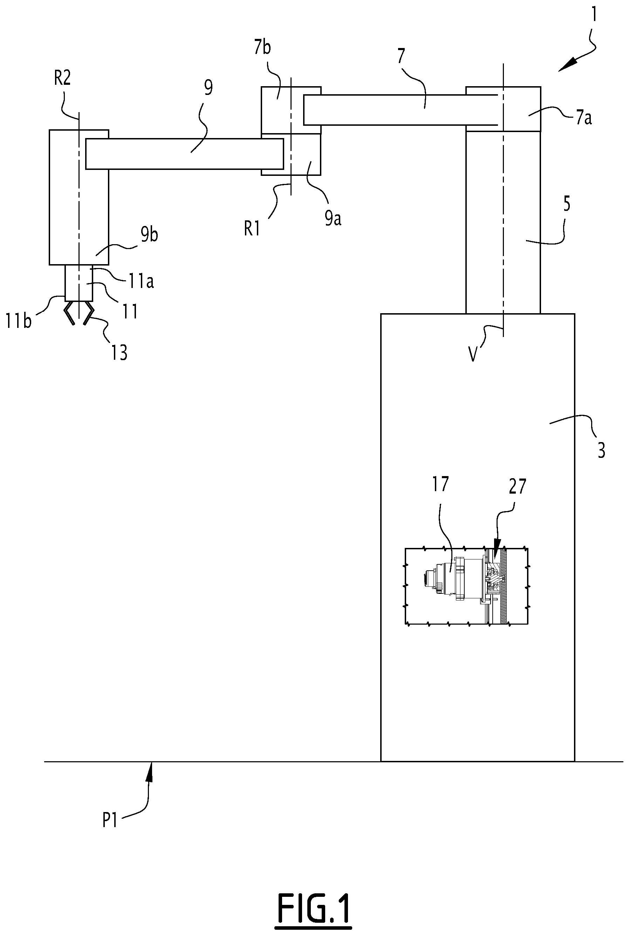

Un bras de robot 1 selon un premier mode de réalisation de l'invention est décrit à la figure 1. Le bras de robot 1 comprend une embase 3, une colonne 5, un bras 7, un avant-bras 9, une bride 11 et un outil 13.

L'embase 3 est un premier membre du bras de robot 1 et est fixe par rapport à un plan horizontal P1 sur lequel l'embase 3 repose. Le plan horizontal P1 peut être par exemple une surface de sol, d'établi ou de table.

La colonne 5 est un deuxième membre du bras de robot 1. La colonne 5, lorsque la colonne 5 est assemblée sur le bras de robot 1, s'étend longitudinalement suivant un axe vertical V, perpendiculaire au plan horizontal P1. La colonne 5 est, avantageusement, mobile en translation par rapport à l'embase 3 le long de l'axe vertical V.

Le bras 7, lorsque le bras 7 est assemblé sur le bras de robot 1, s'étend parallèlement au plan horizontal P1. Le bras 7 est assemblé, à une première extrémité 7a, sur la colonne 5 et est mobile en rotation par rapport à la colonne 5 autour de l'axe vertical V.

L'avant-bras 9, lorsque l'avant-bras 9 est assemblé sur le bras de robot 1, s'étend parallèlement au plan horizontal P1. L'avant-bras 9 est assemblé, à une première extrémité 9a, sur une deuxième extrémité 7b du bras 7 et est mobile en rotation par rapport au bras 7 autour d'un premier axe de rotation R1 parallèle à l'axe vertical V.

La bride 11, lorsque la bride 11 est assemblée sur le bras de robot 1, s'étend selon un axe parallèle à l'axe vertical V. La bride 11 est assemblée, à une première extrémité 11a, sur une deuxième extrémité 9b de l'avant-bras 9 et est mobile en rotation par rapport à l'avant-bras 9 autour d'un deuxième axe de rotation R2 parallèle à l'axe vertical V.

L'outil 13 est assemblé à une deuxième extrémité 11b de la bride 11. L'outil est par exemple une pince apte à saisir une pièce.

Le bras de robot 1 comprend, également, un système de déplacement 15, pour déplacer la colonne 5 par rapport à l'embase 3. Le système de déplacement 15 comprend un moteur 17 et un système de transmission mécanique 19.

Le moteur 17 s'étend selon un axe moteur A17 et comprend un stator 21 fixé à l'embase 3 et un arbre moteur 23 en rotation par rapport au stator 21 autour de l'axe moteur A17. L'arbre moteur 23 est ainsi en rotation autour de l'axe moteur A17 par rapport à l'embase 3.

Avantageusement, le système de transmission mécanique 19 comprend un pignon 25 et une crémaillère 26.

Le pignon 25 est solidaire en rotation de l'arbre moteur 23 autour de l'axe moteur A17. Le pignon 25 présente une denture 36.

La crémaillère 26 est fixée à la colonne 5 et présente une denture, non représentée, apte à être engrenée par la denture 36 du pignon 25 de sorte que la rotation du pignon 25 autour de l'axe moteur A17 entraine, par l'intermédiaire de la crémaillère 26, la translation verticale de la colonne 5 par rapport à l'embase 3.

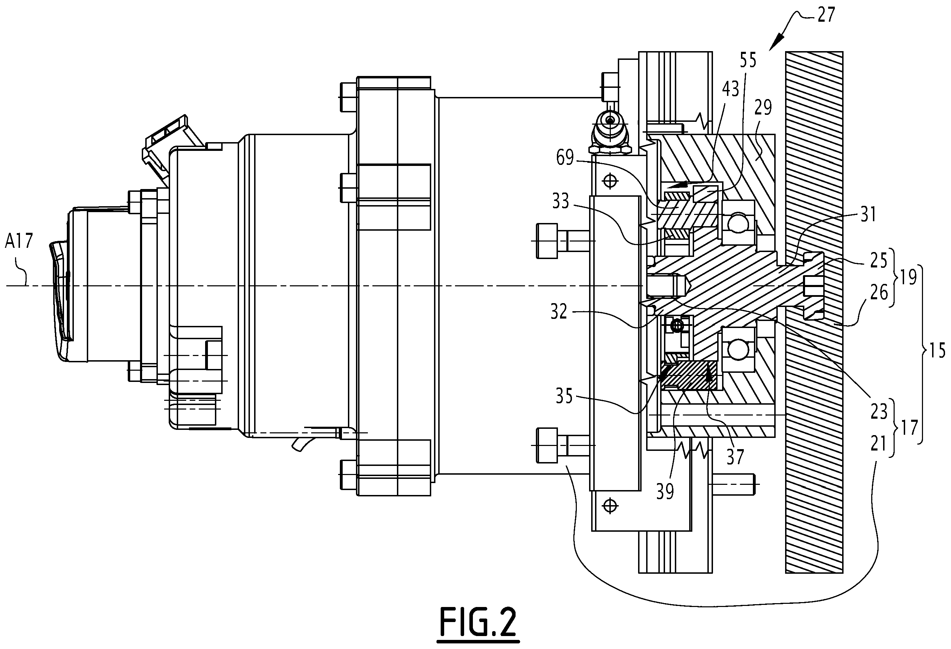

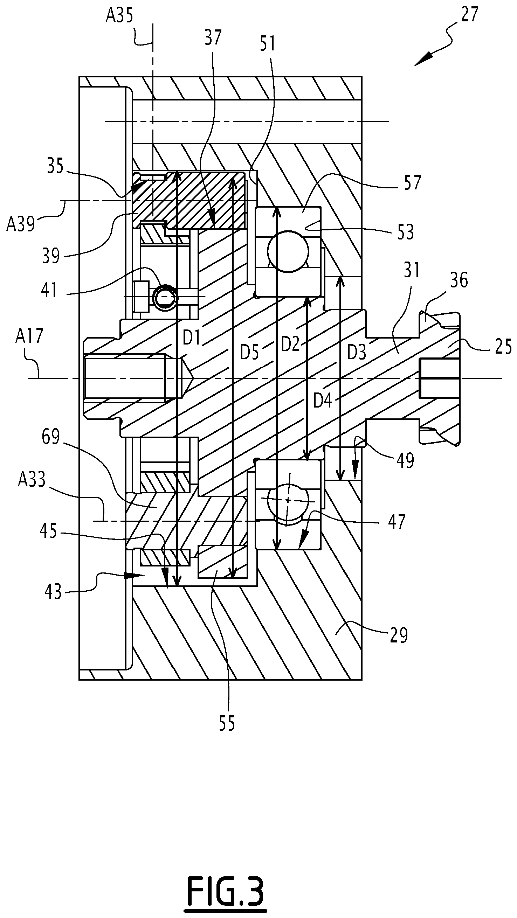

Le bras de robot 1 comprend également un dispositif de blocage 27 automatique du bras de robot 1 décrit aux figures 2 à 5.

Le dispositif de blocage 27 comprend une couronne 29, un moyeu 31, un basculeur 33, une rainure 35, une rampe de guidage 37, un pion 39 et un ressort de rappel 41.

La couronne 29 est pourvue d'un alésage 43 qui centré sur la couronne 29 et qui traverse la couronne 29 de part en part selon l'axe moteur A17 lorsque la couronne 29 est montée sur le bras de robot 1.

L'alésage 43 présente une première portion interne 45, présentant un premier diamètre interne D1, une deuxième portion interne 47, présentant un deuxième diamètre interne D2, inférieur au premier diamètre interne D1, et une troisième portion interne 49, présentant un troisième diamètre interne D3, inférieur au deuxième diamètre interne D2. La diminution de diamètre entre le premier diamètre interne D1 et le deuxième diamètre interne D2 forme un premier épaulement 51 appartenant à l'alésage 43 et la diminution de diamètre entre le deuxième diamètre interne D2 et le troisième diamètre interne D3 forme un deuxième épaulement 53 appartenant à l'alésage 43.

Lorsque la couronne 29 est montée sur le bras de robot 1, la couronne 29 est centrée sur l'axe moteur A17 et est fixée sur le stator 21, la première portion interne 45 étant tournée vers le stator 21. Ainsi la couronne 29 est solidaire de l'embase 3.

Le moyeu 31 est cylindrique et présente un diamètre externe D4 inférieur au troisième diamètre interne D3.

Le moyeu 31 comprend une platine 55. La platine 55 s'étend perpendiculairement à un axe de révolution du moyeu 31, qui lorsque le moyeu 31 est monté sur le bras de robot 1 est coaxial avec l'axe moteur A17. La platine 55 est une pièce de révolution autour de l'axe moteur A17 lorsque le moyeu 31 est monté sur le bras de robot 1 et délimite un deuxième diamètre externe D5 supérieur au premier diamètre externe D4 et inférieur au premier diamètre interne D1.

Avantageusement, le pignon 25 est solidaire du moyeu 31. Plus précisément, le pignon 25 et le moyeu 31 sont formés par une même pièce monobloc. En alternative, le pignon 25 peut être une pièce distincte fixée par des vis.

Une extrémité 32 du moyeu 31 est montée sur l'arbre moteur 23 et est solidaire en rotation de l'arbre moteur 23 autour de l'axe moteur A17. Lorsque la moyeu 31 est monté sur l'arbre moteur 23, le moyeu 31 est partiellement contenu dans l'alésage 43. Plus précisément, la platine 55 est contenue dans la première portion interne 45 de l'alésage 43 et le pignon 25 débouche en dehors de l'alésage 43.

Le système de blocage 27 comprend un roulement à bille 57, interposé entre la deuxième portion interne 47 et le moyeu 31 et en butée contre le deuxième épaulement 53. Ainsi, le moyeu 31 est configuré pour être mis en rotation autour de l'axe moteur A17 par rapport à la couronne 29.

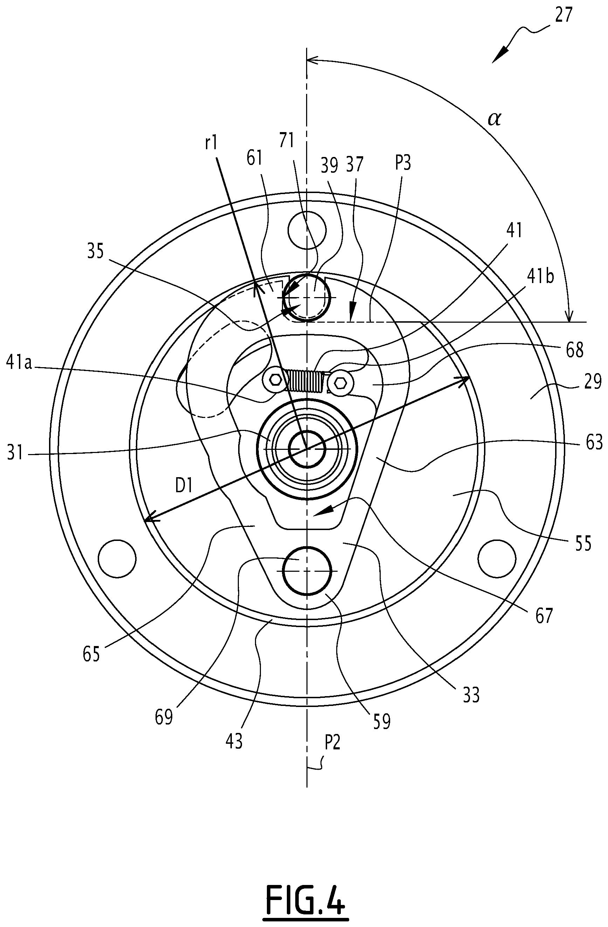

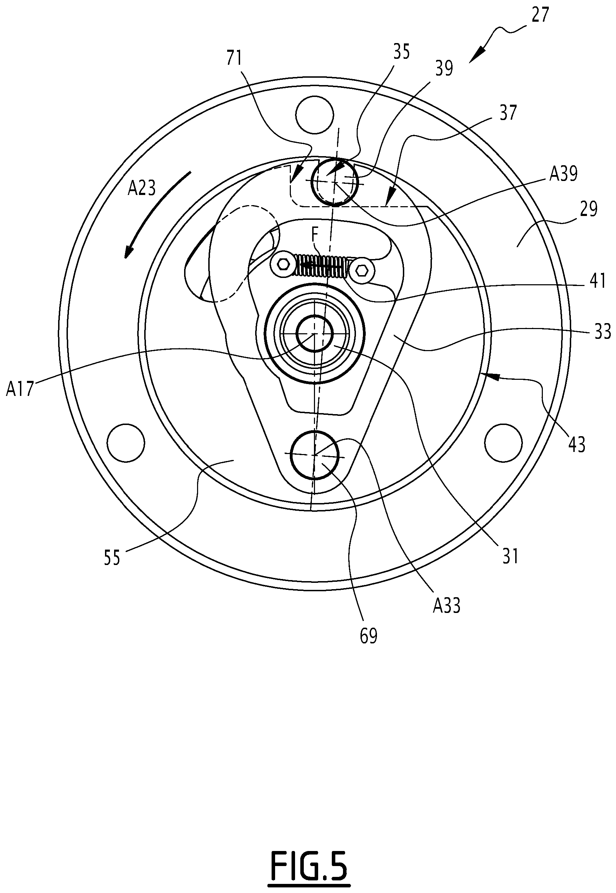

Le basculeur 33 a une forme ovoïde, en projection dans un plan perpendiculaire à l'axe moteur A17, comme visible aux figure 4 et 5. Le basculeur 33 comprend une base arrondie 59, une portion arrondie 61, une première patte 63 et une deuxième patte 65. La première patte 63 et la deuxième patte 65 relient la base arrondie 59 à la portion arrondie 61 en délimitant un évidement 67 entre la portion arrondie 61, la base arrondie 59, la première patte 63 et la deuxième patte 65.

La portion arrondie 61 présente un rayon r1 inférieur au premier diamètre D1 divisé par deux.

La première patte 63 comprend, à la jonction avec la portion arrondie 61, une excroissance 68 qui s'étend dans l'évidement 67.

Le basculeur 33 est porté par le moyeu 31 et est solidaire en rotation du moyeu 31 autour de l'axe moteur A17. Plus précisément, le basculeur est monté sur la platine 55 par l'intermédiaire d'un arbre de basculeur 69 qui s'étend selon un axe de basculeur A33 parallèle à l'axe moteur A17 et non coaxial à l'axe moteur A17. L'arbre de basculeur 69 est fixé à la platine 55 et la base arrondie 59 est montée mobile en rotation sur l'arbre de basculeur 69. Le basculeur est ainsi mobile en rotation, par rapport au moyeu 31, autour de l'axe de basculeur A33 entre une position de libération et une position de blocage.

Le basculeur 33 est positionné suivant l'axe moteur A17 entre le stator 21 et la platine 55 et l'extrémité 32 du moyeu 31 traverse l'évidement 67.

Avantageusement, lorsque le basculeur 33 est en position de libération, un centre d'inertie du basculeur 33 est positionné dans un plan radial P2 contenant l'axe de basculeur A33 et l'axe moteur A17. Ainsi, le basculeur 33 est insensible à une force centrifuge agissant sur le basculeur 33 lorsque celui-ci est en rotation autour de l'axe moteur A17. Le centre d'inertie du basculeur est situé du côté de l'axe moteur A17 par rapport à l'axe de basculeur A33.

Le ressort de rappel 41 est fixé à une première extrémité 41a à la platine 55 et à une deuxième extrémité 41b à l'excroissance 68. Le ressort de rappel 41 agit sur la platine 55 et sur le basculeur 33 de sorte à appliquer une force de rappel F qui tend à ramener le basculeur 33 de la position de blocage vers la position de libération.

La rainure 35 est ménagée dans un premier élément parmi le basculeur 33 et la platine 55. Dans cet exemple, la rainure 35 est, avantageusement, ménagée sur le basculeur 33, le basculeur 33 constituant ainsi le premier élément. La rainure 35 s'étend radialement par rapport à l'axe moteur A17 vers l'alésage 43 suivant un axe de rainure A35. La rainure 35 débouche radialement dans l'alésage 43. Dans cet exemple la rainure 35 traverse de part en part la platine 55 parallèlement à l'axe moteur A17.

Avantageusement, l'axe moteur A17 est agencé entre l'axe de basculeur A33 et la rainure 35. Cette conception permet d'obtenir un système de blocage 27 compacte.

La rampe de guidage 37 est plane et ménagée à une périphérie d'un deuxième élément parmi le basculeur 33 et la platine 55, le deuxième élément étant distinct du premier élément. Dans cet exemple, le rampe de guidage 37 est, avantageusement, ménagée à la périphérie de la platine 55. La platine 55 constituant ainsi le deuxième élément. La rampe de guidage 37 traverse le plan radial P2 et s'étend perpendiculairement à l'axe de basculeur A33 jusqu'à l'alésage 43.

La rampe de guidage 37 est perpendiculaire à un rayon de la platine 55. Plus précisément, la rampe de guidage 37 est coplanaire avec un plan de rampe P3. Le plan de rampe P3 est parallèle à l'axe moteur A17 et, avantageusement, incliné par rapport au plan radial P2 d'un angle α compris entre 86 et 90 degrés, de préférence de 87 à 90 degrés et de préférence de 88 degrés.

La platine comprend, avantageusement, une paroi de butée 71 qui prolonge la rampe de guidage 37. La paroi de butée 71 est parallèle au plan radial P2.

Le pion 39 est cylindrique et s'étend selon un axe de pion A39 qui, lorsque le pion est monté sur le bras de robot 1, est parallèle à l'axe moteur A17. Le pion est monté dans la rainure 35 pour être mobile en translation selon l'axe de rainure A35 par rapport au basculeur 33 lorsque le basculeur 33 est en position de libération et pour être bloqué entre l'alésage 43 et la rampe de guidage 37 lorsque le basculeur 33 est en position de blocage. L'axe de rainure A35 est perpendiculaire à l'axe de basculeur A33 et est compris dans le plan radial P2 lorsque le basculeur 33 est en position de libération. La rainure 35 guide le pion 39 entre la position de libération et la position de blocage du basculeur 33.

Lorsque le bras de robot 1 est dans une phase de fonctionnement normal, c'est-à-dire lorsque l'arbre moteur 23 est en rotation autour de l'axe moteur A17 dans le sens horaire par rapport à la couronne 29, le basculeur 33 est en position de libération et le pion 39 est libre de se déplacer suivant la rainure 35 entre la rampe de guidage 37 et l'alésage 43. Le moyeu 31, le basculeur 33 et le pion 39 sont alors en rotation par rapport à la couronne 29 autour de l'axe moteur A17.

Avantageusement, le pion 39 est également libre en rotation autour de l'axe de pion A39 lorsque le basculeur 33 est en position de libération de sorte à ne pas nuire à la rotation du moyeu 31 et du basculeur 33, lorsque le bras de robot 1 est dans une phase de fonctionnement normal et que le pion 39 est en contact avec l'alésage 43.

Avantageusement, lorsque le dispositif de blocage 27 n'est pas activé, c'est-à-dire lorsque le basculeur 33 est en position de libération, la force de rappel F tend à amener le pion 39 en butée contre la paroi de butée 71.

Lorsque le dispositif de blocage 27 n'est pas activé, l'axe de pion A39, l'axe moteur A17 et l'axe de basculeur A33 sont dans le plan radial P2 et, avantageusement, un centre d'inertie d'un ensemble, formé par le moyeu 31, le basculeur 33, le ressort de rappel 41 et le pion 39 est positionné sur l'axe moteur A17. Cette conception du dispositif de blocage 27 permet d'assurer l'équilibre dynamique dans les phases de fonctionnement normal du bras de robot 1, en d'autres termes cela garantit que la force centrifuge agissant sur le basculeur 33 ne déclenche pas le blocage du dispositif de blocage 27.

Lors d'une coupure de courant d'alimentation du moteur 17, l'action de la pesanteur entraine la chute de la colonne 5 et l'arbre moteur 23 subit une forte accélération A23 dans le sens antihoraire, tel que représenté sur la figure 5, sous l'effet de son inertie, le basculeur 33 tourne alors de la position de libération vers la position de blocage par rapport à la platine 55 autour de l'axe de basculeur A33, avantageusement, dans le sens horaire de telle sorte que le pion 39 se déplace, selon l'axe de rainure A35, le long de la rainure 35 et le long de la rampe de guidage 37 jusqu'à ce qu'il arrive au contact de l'alésage 43 de la couronne 29. Lorsque le basculeur 33 est en position de blocage, la platine 55 et l'alésage 43 coince le pion 39, interposé entre l'alésage 43 et la rampe de guidage 37, et la rotation du pion 39 autour de l'axe de pion A39 est, avantageusement, bloquée. Ainsi le pion 39 bloque directement la platine 55 par rapport à la couronne 29 et l'arbre moteur 23 ne peut plus tourner. La chute de la colonne 5 du bras de robot 1 est alors stoppée.

Lorsque le basculeur 33 passe de la position de libération à la position de blocage, le pion 39 roule sur la rampe de guidage 37 de sorte que les forces de frottement, exercées sur le pion 39, qui s'ajoutent à la force de rappel F du ressort de rappel 41, défavorable au déplacement du basculeur 33 de la position de libération vers la position de blocage, sont limitées et plus stables.

L'inclinaison de la rampe de guidage 37 évite que le pion 39 rebondisse sur l'alésage 43 de la position de blocage vers la position de libération lorsque le dispositif de blocage 27 entre en action. L'inclinaison de la rampe de guidage 37 garantit également un coincement permanent du pion 39 entre l'alésage 43 et la platine 55.

La force de rappel F du ressort de rappel 41 est choisie en fonction de la valeur de l'accélération angulaire à laquelle le déclenchement du dispositif de blocage 27 est souhaitée. Ainsi il y a un seuil d'accélération pour que le basculeur 33 commence à rejoindre la position de blocage. Ceci permet une rotation de l'arbre moteur 23 jusqu'à un seuil d'accélération défini dans le sens antihoraire et garantit que le platine 55 et le basculeur 33 ne seront jamais bloqués dans le sens de rotation horaire.

Pour débloquer le dispositif de blocage 27, il suffit d'actionner le moteur 17 dans le sens horaire.

En variante, non représentée, le système de transmission mécanique 19 comprend le pignon 25 solidaire en rotation de l'arbre moteur 23 et une courroie fixée à la colonne 5 et entrainée par le pignon 25 de sorte que la rotation du pignon 25 autour de l'axe moteur A17 entraine la translation verticale de la colonne 5 par rapport à l'embase 3 par l'intermédiaire de la courroie.

En variante, non représentée, le système de transmission mécanique 19 comprend le pignon 25 solidaire en rotation de l'arbre moteur 23 et une vis sans fin fixée à la colonne 5 et engrenée par le pignon 25 de sorte que la rotation du pignon 25 autour de l'axe moteur A17 entraine la translation verticale de la colonne 5 par rapport à l'embase 3 par l'intermédiaire de la vis sans fin.

De façon plus générale, l'invention est applicable à un moteur qui entraînerait en translation la colonne 5 par rapport à l'embase 3.

En variante, non représentée, en fonctionnement normal, l'arbre moteur 23 est en rotation par rapport à la couronne 29 dans le sens antihoraire. Lorsque l'arbre moteur 23 subit une forte accélération dans le sens horaire, le basculeur 33 passe de la position de libération à la position de blocage en tournant par rapport à l'axe de basculeur A33 dans le sens horaire.

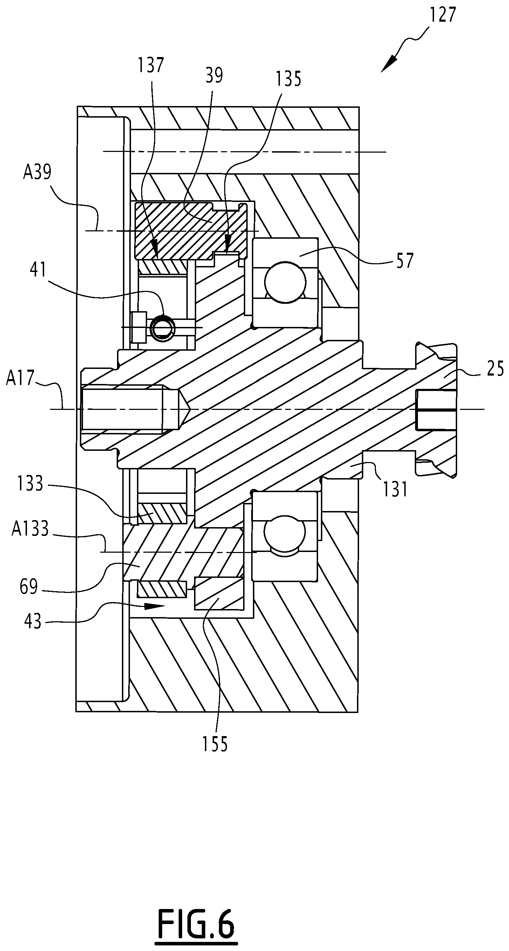

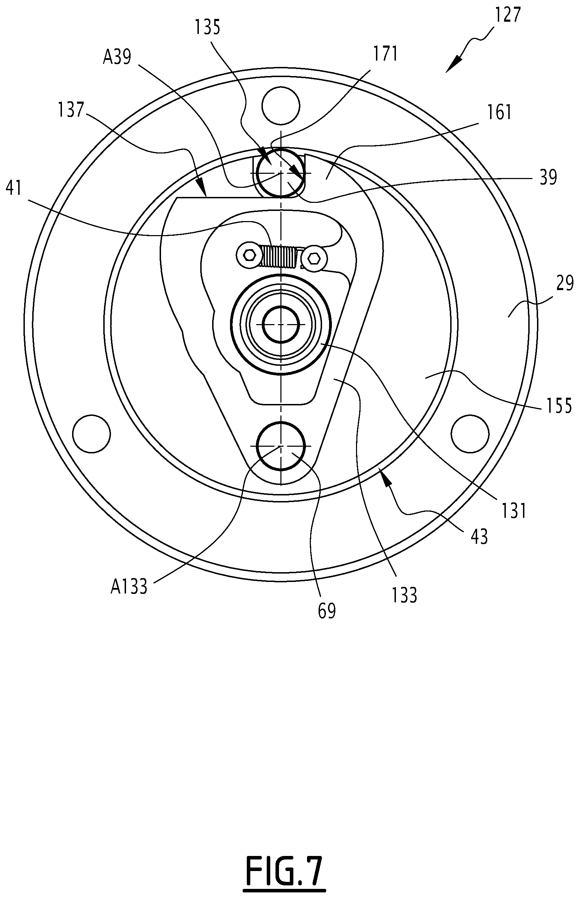

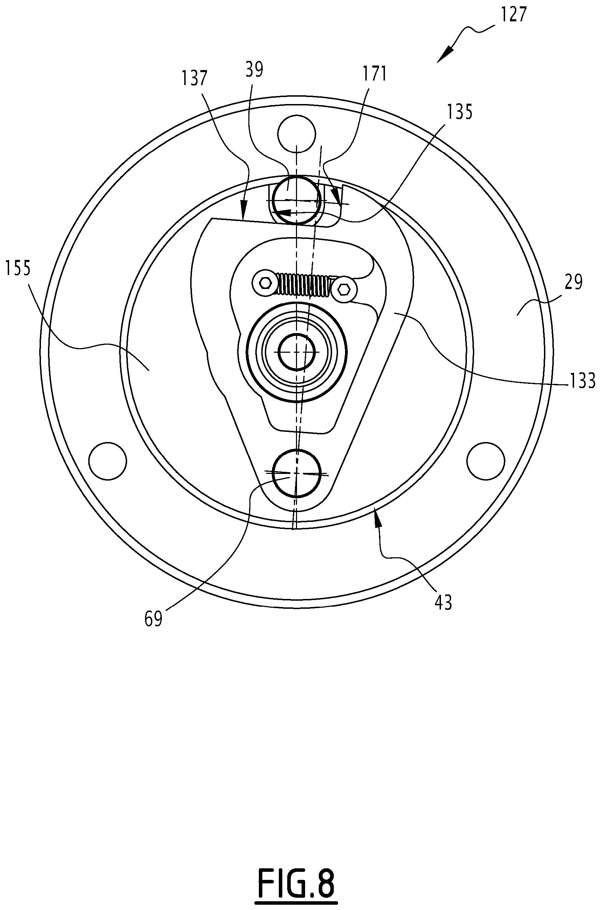

Un dispositif de blocage 127, selon un deuxième mode de réalisation est représenté aux figures 6 à 8. Les signes de référence du dispositif de blocage 127 correspondent à ceux du dispositif de blocage 27, lorsque l'élément référencé est le même. Les signes de référence sont augmentés de 100 par rapport à ceux du dispositif de blocage 27, lorsqu'ils désignent des éléments modifiés dans le dispositif de blocage 127 par rapport au dispositif de blocage 27.

Si un élément est référencé sur l'une des figures 6 à 8 sans être mentionné dans la description, il correspond à l'élément portant la même référence dans le premier mode de réalisation.

Le dispositif de blocage 127 est identique au dispositif de blocage 27 du premier mode de réalisation, à l'exception des caractéristiques décrites ci-dessous.

La rainure 135 est ménagée dans le platine 155 et la rampe de guidage 137 et la paroi de butée 171 sont ménagées à une périphérie de la portion arrondie 161 du basculeur 133. La rainure 135 s'étend radialement par rapport à l'axe moteur A17 vers l'alésage 43 suivant un axe de rainure qui est dans le plan P2. Le fonctionnement du dispositif de blocage 127 est analogue au dispositif de blocage 27, lorsque le basculeur 133 passe de la position de libération à la position de blocage, le pion 39 se coince entre l'alésage 43 et la rampe de guidage 137.

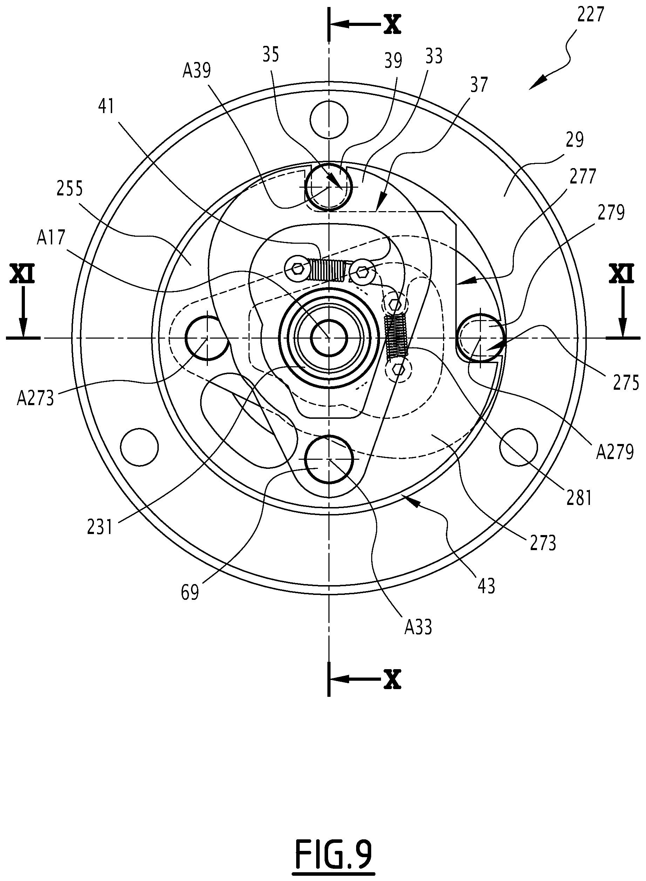

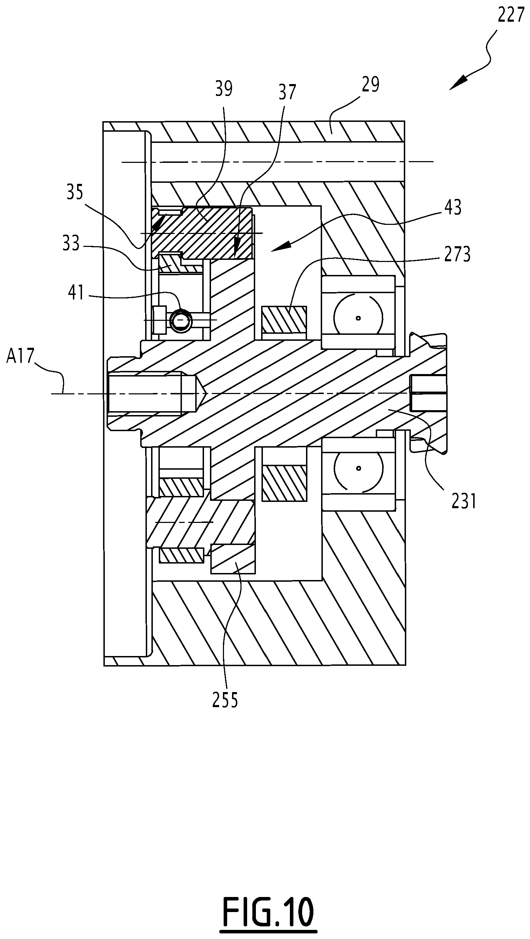

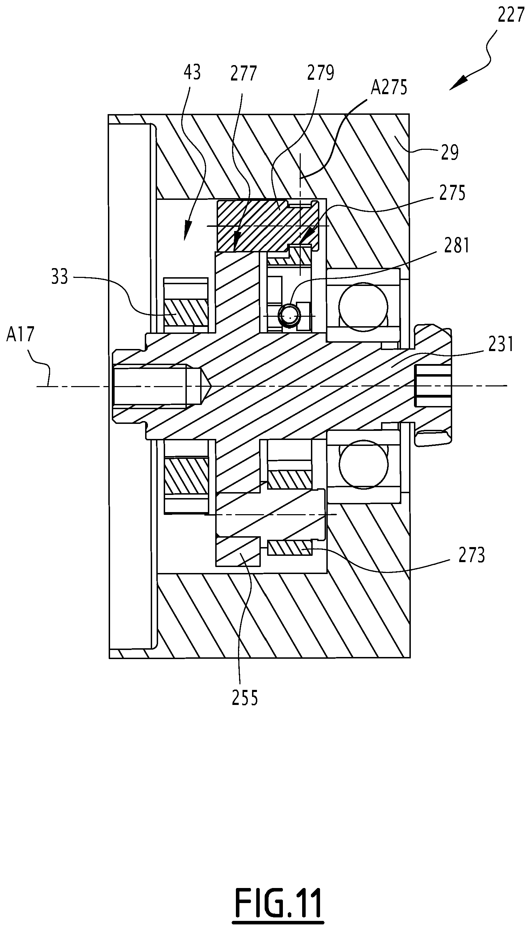

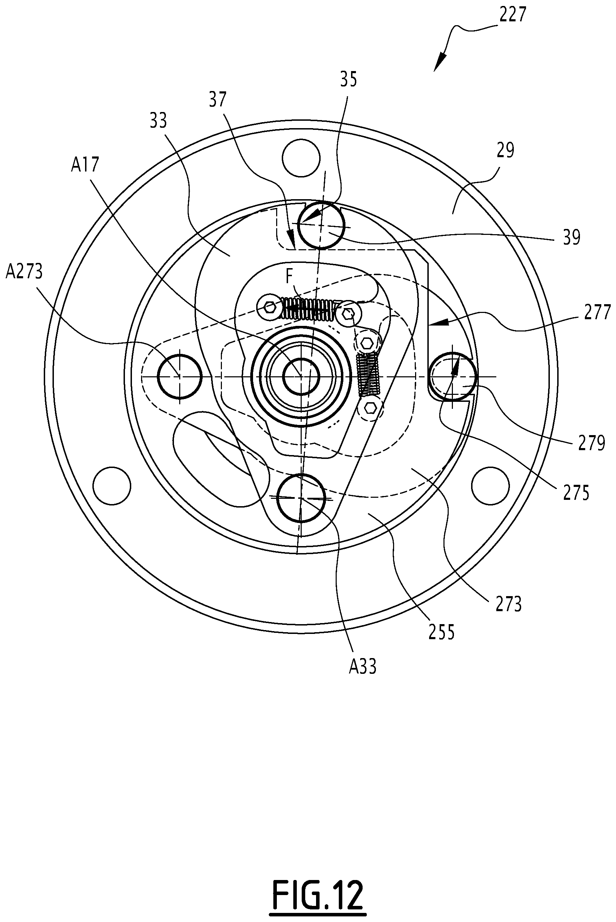

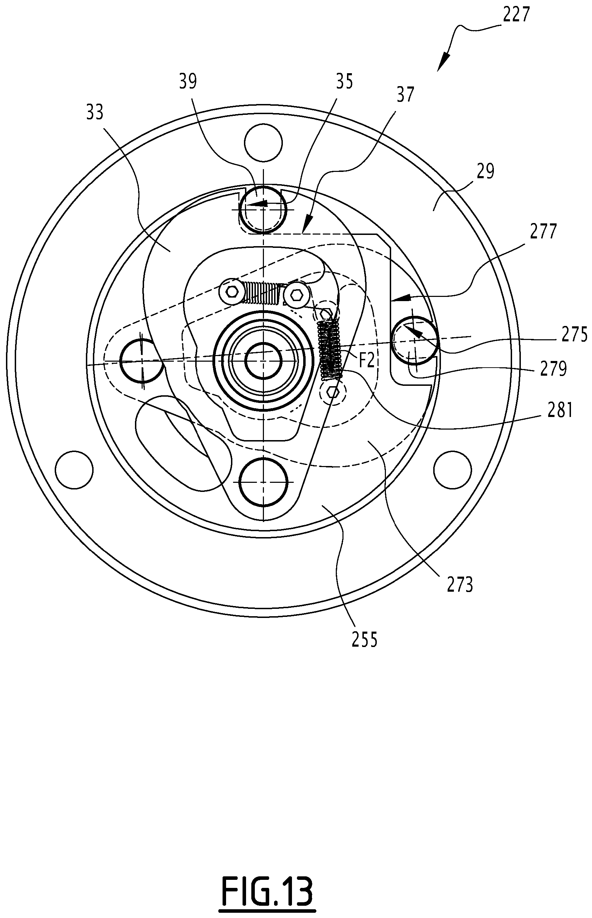

Un dispositif de blocage 227, selon un troisième mode de réalisation est représenté aux figures 9 à 13. Les signes de référence du dispositif de blocage 227 correspondent à ceux du dispositif de blocage 27, lorsque l'élément référencé est le même. Les signes de référence sont augmentés de 200 par rapport à ceux du dispositif de blocage 27, lorsqu'ils désignent des éléments modifiés dans le dispositif de blocage 227 par rapport au dispositif de blocage 27.

Si un élément est référencé sur l'une des figures 9 à 13 sans être mentionné dans la description, il correspond à l'élément portant la même référence dans le premier mode de réalisation.

Le dispositif de blocage 227 est identique au dispositif de blocage 27 du premier mode de réalisation, à l'exception des caractéristiques décrites ci-dessous.

Le dispositif de blocage 227 comprend un basculeur additionnel 273, analogue au basculeur 33, porté par la platine 255 et mobile en rotation par rapport à la platine 255 autour d'un axe de basculeur additionnel A273 parallèle à l'axe moteur A17 et non-coaxial avec l'axe moteur A17, entre une position de blocage et une position de libération. L'angle formé par l'axe de basculeur A33, l'axe moteur A17 et l'axe de basculeur additionnel A273 est égale à 90 degrés. Le basculeur additionnel 273 passe de la position de libération à la position de blocage dans le sens inverse du basculeur 33 de sorte que le basculeur additionnel 273 est en position de libération, respectivement en position de blocage, lorsque le basculeur 33 est en position de blocage, respectivement en position de libération. En alternative, l'angle formé par l'axe de basculeur A33, l'axe moteur A17 et l'axe de basculeur additionnel A273 pourrait être différent de 90 degrés et être par exemple égal à 180 degrés.

Le dispositif de blocage 227 comprend une rainure additionnelle 275 ménagée dans un troisième élément parmi le basculeur additionnel 273 et la platine 255. Dans cet exemple, la rainure additionnelle 275 est ménagée sur le basculeur additionnel 273. La rainure additionnelle 275 s'étend radialement par rapport à l'axe moteur A17 vers l'alésage 43 suivant un axe de rainure additionnelle A275 et débouche dans l'alésage 43.

Le dispositif de blocage 227 comprend une rampe de guidage additionnelle 277, ménagée à une périphérie d'un quatrième élément parmi le basculeur additionnel 273 et la platine 255, le quatrième élément étant distinct du troisième élément. Dans cet exemple, la rampe de guidage additionnelle 277 est ménagée à la périphérie de la platine 255.

Le dispositif de blocage 227 comprend un pion additionnel 279 cylindrique, qui s'étend selon un axe de pion additionnel A279, parallèle à l'axe moteur A17, le pion additionnel 279 étant monté dans la rainure additionnelle 275 pour être mobile en translation selon l'axe de rainure additionnelle A275 par rapport au basculeur additionnel 273 lorsque le basculeur additionnel 273 est en position de libération, et pour être bloqué entre l'alésage 43 et la rampe de guidage additionnelle 277 lorsque le basculeur additionnel 273 est en position de blocage.

Le dispositif de blocage 227 comprend un ressort de rappel additionnel 281, agissant entre la platine 255 et le basculeur additionnel 273 de sorte à appliquer une force de rappel F2 ramenant le basculeur additionnel 273 vers la position de libération.

La rampe de guidage 37 et la rampe de guidage additionnelle 277 sont opposées de sorte que, lorsque l'arbre moteur subit une forte accélération selon un sens de rotation autour de l'axe moteur A17, le basculeur additionnel 273 passe en position de blocage et que le pion additionnel 279 bloque la rotation entre la platine 255 et la couronne 29 et que, lorsque l'arbre moteur subit une forte accélération selon un autre sens de rotation autour de l'axe moteur A17, le basculeur 33 passe en position de blocage et le pion 39 bloque la rotation entre la platine 255 et la couronne 29. Ainsi le système de blocage 227 bloque la rotation de la platine 255 par rapport à la couronne 29 dès que l'arbre moteur 23 est soumis à une forte accélération, peu importe le sens de rotation. Le dispositif de blocage 227 permet donc le blocage du second membre 5 par rapport au premier membre 3 dans les deux sens de rotation du moyeu 31 lorsque les accélérations angulaires du moyeu 31 dépassent un seuil qui est ajustable par le choix du ressort de rappel 41 et du ressort de rappel additionnel 281.

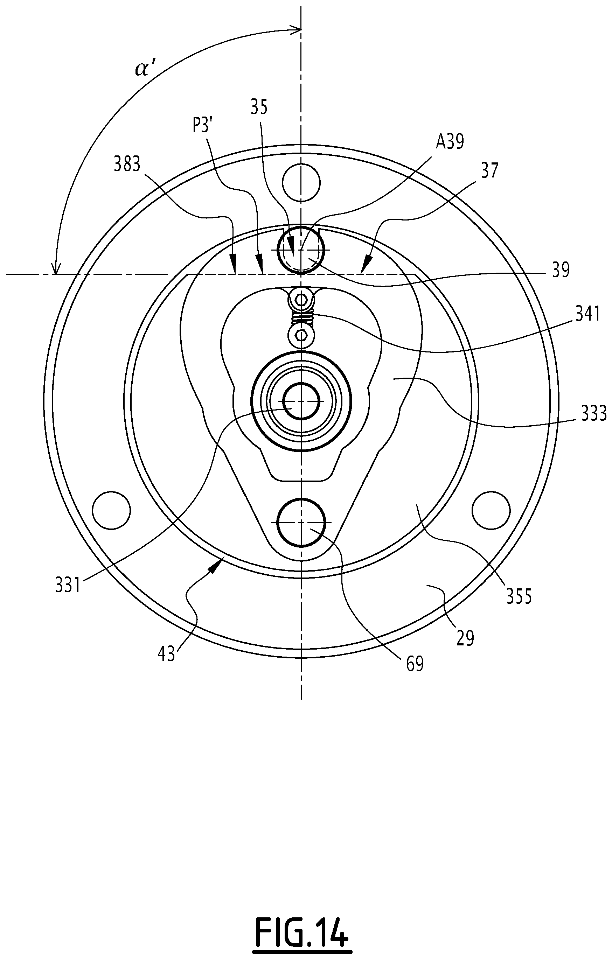

Un dispositif de blocage 327, selon un quatrième mode de réalisation est représenté à la figure 14. Les signes de référence du dispositif de blocage 327 correspondent à ceux du dispositif de blocage 27, lorsque l'élément référencé est le même. Les signes de référence sont augmentés de 300 par rapport à ceux du dispositif de blocage 27, lorsqu'ils désignent des éléments modifiés dans le dispositif de blocage 327 par rapport au dispositif de blocage 27.

Si un élément est référencé sur la figure 14 sans être mentionné dans la description, il correspond à l'élément portant la même référence dans le premier mode de réalisation.

Le dispositif de blocage 327 est identique au dispositif de blocage 27 du premier mode de réalisation, à l'exception des caractéristiques décrites ci-dessous.

Le platine 355 comprend une deuxième rampe de guidage 383 symétrique à la première rampe de guidage 37 par rapport à un plan radial P2.

La deuxième rampe de guidage 327 est perpendiculaire à un rayon de la platine 355. Plus précisément, la rampe de guidage 383 est coplanaire avec un plan de rampe P3'. Le plan de rampe P3' est parallèle à l'axe moteur A17 et, avantageusement, incliné par rapport au plan radial P2 d'un angle α' compris entre 86 et 90 degrés, de préférence de 87 à 90 degrés et de préférence de 88 degrés.

Lorsque le basculeur 333 est en position de libération, la force de rappel F exercée par le ressort de rappel 341 tend à amener le pion 39 tel que l'axe de pion A39 soit dans le plan radial P2. Le pion 39 occupe alors une position d'équilibre entre la rampe de guidage 37 et la deuxième rampe de guidage 383.

Il est entendu que le dispositif de blocage 327 ne comprend pas de paroi de butée prolongeant la première rampe 35. Ainsi le basculeur 333 peut basculer dans n'importe quel sens de rotation lorsque l'arbre moteur 23 est soumis à une forte accélération, peu importe le sens de rotation de l'arbre moteur 23, de sorte à coincer le pion 39 entre la platine 355 et l'alésage 43 pour bloquer la rotation de l'arbre moteur 23.

Le ressort de rappel 341 agit entre le basculeur 333 et la platine 355 de telle sorte à pouvoir rappeler le basculeur 333 en position de libération quel que soit le sens de rotation du basculeur 333 par rapport à la platine 355.

Dans les modes de réalisation de l'invention décrits, le stator 21 est solidaire de l'embase 3 alors que la crémaillère 26 est solidaire de la colonne 5, l'invention est tout à fait applicable à un bras de robot dans lequel le stator est solidaire de la colonne et la crémaillère est fixe par rapport à l'embase.

De même, dans les modes de réalisation de l'invention décrits, l'arbre moteur est le rotor du moteur électrique, l'invention est tout à fait applicable si l'arbre moteur est l'arbre de sortie d'un réducteur couplé à un moteur électrique.

De plus l'invention est applicable à un bras de robot dans lequel le premier membre est mobile en rotation par rapport au second membre. Par exemple, elle pourrait être implémentée sur l'articulation de l'avant-bras sur le bras d'un robot industriel à 6 axes.

Toute caractéristique décrite ci-avant pour un mode de réalisation ou une variante est applicable aux autres modes de réalisation et variantes décrits ci-avant, pour autant que cela est techniquement possible.

## Revendications

1. Dispositif de blocage (27; 127; 227; 327) automatique d'un premier membre (3) et un deuxième membre (5) d'un bras de robot (1), mobiles l'un par rapport à l'autre, le dispositif de blocage (27; 127; 227; 327) comprenant :
- une couronne (29), pourvue d'un alésage (43), centrée sur un axe moteur (A17) fixe par rapport à la couronne (29) et configurée pour être solidaire du premier membre (3),
- un moyeu (31), configuré pour être mis en rotation autour de l'axe moteur (A17) par rapport à la couronne (29), à l'aide d'un moteur (17) appartenant au bras de robot (1),
- une platine (55; 155; 255; 355), solidaire en rotation du moyeu (31) autour de l'axe moteur (A17),
- un basculeur (33; 133; 333), porté par la platine (55; 155; 255; 355) et mobile en rotation par rapport à la platine (55; 155; 255; 355) autour d'un axe de basculeur (A33; A133) parallèle à l'axe moteur (A17) et non-coaxial avec l'axe moteur (A17), entre une position de blocage et une position de libération,
- une rainure (35; 135), ménagée dans un premier élément parmi le basculeur (33; 133) et la platine (55; 155; 255; 355), la rainure (35; 135) s'étendant radialement par rapport à l'axe moteur (A17) vers l'alésage (43) suivant un axe de rainure (A35),
- une rampe de guidage (37 ; 137), ménagée à une périphérie d'un deuxième élément parmi le basculeur (33; 133; 333) et la platine (55; 155; 255; 355), le deuxième élément étant distinct du premier élément,
- un pion (39), qui est cylindrique et qui s'étend selon un axe de pion (A39), parallèle à l'axe moteur (A17), le pion (39) étant monté dans la rainure (35; 135) pour être mobile en translation selon l'axe de rainure (A35) par rapport au premier élément lorsque le basculeur (33; 133; 333) est en position de libération, et pour être bloqué entre l'alésage (43) et la rampe de guidage (37 ; 137) lorsque le basculeur (33; 133; 333) est en position de blocage, et
- un ressort de rappel (41 ; 341), agissant entre la platine (55; 155; 255; 355) et le basculeur (33; 133 ; 333) de sorte à appliquer une force de rappel (F) ramenant le basculeur (33; 133; 333) vers la position de libération.

2. Dispositif de blocage (27; 127; 227; 327) selon la revendication précédente, dans lequel, lorsque le sens de rotation du moyeu (31) est antihoraire, respectivement horaire, autour de l'axe moteur (A17) par rapport à la couronne (29), pour entrainer le deuxième membre (5) à l'encontre de la pesanteur, la rampe de guidage (37 ; 137) est plane et le basculeur (33; 133; 333) passe de la position de libération à la position de blocage en tournant par rapport à la platine (55; 155; 255; 355) dans le sens horaire, respectivement antihoraire, autour de l'axe de basculeur (A33; A133), par rapport à la platine (55; 155; 255; 355).

3. Dispositif de blocage (27; 127; 227; 327) selon l'une quelconque des revendications précédentes, dans lequel l'axe moteur (A17) est agencé entre l'axe de basculeur (A33; A133) et la rainure (35; 135).

4. Dispositif de blocage (27; 127; 227; 327) selon l'une quelconque des revendications précédentes, dans lequel la rampe de guidage (37; 137) est coplanaire avec un plan de rampe (P3), parallèle à l'axe moteur (A17) et incliné par rapport à un plan radial (P2) contenant l'axe moteur (A17) et l'axe de basculeur (A33; A133), d'un angle (α) de 86 à 90 degrés, de préférence de 87 à 89 degrés et de préférence encore de 88 degrés.

5. Dispositif de blocage (27; 127; 227; 327) selon l'une quelconque des revendications précédentes, dans lequel :
- le pion (39) est libre en rotation autour de l'axe de pion (A39) lorsque le basculeur (33; 133; 333) est en position de libération, et
- la rotation du pion (39) autour de l'axe de pion (A39) est bloquée lorsque le basculeur (33; 133; 333) est en position de blocage, par l'interposition du pion (39) entre l'alésage (43) et la rampe de guidage (37; 137).

6. Dispositif de blocage (27; 127; 227; 327) selon l'une quelconque des revendications précédentes, dans lequel, lorsque le basculeur (33; 133; 333) est en position de libération, un centre d'inertie du basculeur (33; 133; 333) est positionné dans un plan radial (P2) contenant l'axe de basculeur (A33; A133) et l'axe moteur (A17).

7. Dispositif de blocage (27; 127; 227; 327) selon l'une quelconque des revendications précédentes, dans lequel, lorsque le basculeur (33; 133; 333) est en position de libération, un centre d'inertie d'un ensemble, formé par la platine (55; 155; 255; 355), le basculeur (33; 133; 333), le ressort de rappel (41 ; 341) et le pion (39) est positionné sur l'axe moteur (A17).

8. Dispositif de blocage (27; 227; 327) selon l'une quelconque des revendications précédentes, dans lequel le premier élément est le basculeur (33; 333) et le deuxième élément est la platine (55 ; 255; 355).

9. Dispositif de blocage (127) selon l'une quelconque des revendications 1 à 7, dans lequel le premier élément est la platine (155) et le deuxième élément est le basculeur (133).

10. Dispositif de blocage (27; 127; 227) selon l'une quelconque des revendications précédentes, dans lequel, lorsque le basculeur (33; 133) est en position de libération, la force de rappel (F) exercée par le ressort de rappel (41) tend à amener le pion (39) en butée contre une paroi de butée (71 ; 171) du deuxième élément.

11. Dispositif de blocage (327) selon l'une quelconque des revendications 1 à 9, dans lequel :
- la rampe de guidage (37) est une première rampe de guidage,
- une deuxième rampe de guidage (383), symétrique à la première rampe de guidage (37) par rapport à un plan radial (P2) contenant l'axe de basculeur (A33) et l'axe moteur (A17), est ménagée sur le deuxième élément (355), et
- lorsque le basculeur (333) est en position de libération, la force de rappel (F) exercée par le ressort de rappel (41) tend à amener le pion (39) tel que l'axe de pion (A39) soit dans le plan radial (P2).

12. Dispositif de blocage (227) selon l'une quelconque des revendications précédentes, comprenant :
- un basculeur additionnel (273), porté par la platine (255) et mobile en rotation par rapport à la platine (255) autour d'un axe de basculeur additionnel (A273) parallèle à l'axe moteur (A17) et non-coaxial avec l'axe moteur (A17), entre une position de blocage et une position de libération,
- une rainure additionnelle (275), ménagée dans un troisième élément parmi le basculeur additionnel (273) et la platine (255), la rainure additionnelle (275) s'étendant radialement par rapport à l'axe moteur (A17) vers l'alésage (43) suivant un axe de rainure additionnelle (A275),,
- une rampe de guidage additionnelle (277), ménagée à une périphérie d'un quatrième élément parmi le basculeur additionnel (273) et la platine (255), le quatrième élément étant distinct du troisième élément,
- un pion additionnel (279) cylindrique, qui s'étend selon un axe de pion additionnel (279), parallèle à l'axe moteur (A17), le pion additionnel (279) étant monté dans la rainure additionnelle (277) pour être mobile en translation selon l'axe de rainure additionnelle (A275) par rapport au troisième élément lorsque le basculeur additionnel (273) est en position de libération, et pour être bloqué entre l'alésage (43) et la rampe de guidage additionnelle (A275) lorsque le basculeur additionnel (273) est en position de blocage, et
- un ressort de rappel (281) additionnel, agissant entre la platine (255) et le basculeur additionnel (273) de sorte à appliquer une force de rappel (F2) ramenant le basculeur additionnel (273) vers la position de libération.

13. Bras de robot (1), comprenant :
- un premier membre (3),
- un deuxième membre (5), mobile par rapport au premier membre (3), et
- un dispositif de blocage (27; 127; 227; 327) selon l'une quelconque des revendications précédentes dans lequel le premier membre (3) est entrainé par le moyeu (31) et le second membre (5) est solidaire de la couronne (29) ou le premier membre (3) est solidaire de la couronne (29) et le second membre (5) est entrainé par le moyeu (31).

14. Bras de robot (1) selon la revendication précédente, dans lequel le deuxième membre (5) est mobile en translation par rapport au premier membre (3) le long d'un axe vertical (V).

15. Bras de robot (1) selon la revendication précédente, comprenant un pignon (25) solidaire en rotation du moyeu (31) autour de l'axe moteur (A17) et une crémaillère (26) fixée au deuxième membre (5), la crémaillère (26) étant en prise avec le pignon (25) de sorte que la rotation du pignon (25) autour de l'axe moteur (A17) entraine une translation de la crémaillère (26) par rapport au pignon (25) suivant l'axe vertical (V).
